# EUROPEAN PATENT APPLICATION

(11) **EP 1 489 821 A1**
(43) Date of publication of application: **22.12.2004**
(21) Application number: 04012337.4
(22) Date of filing: 25.05.2004
(51) Int. Cl.: H04M 1/23, H04M 1/02, H04M 1/725

(54) **Modular wireless telephone with replaceable display and input modules**

(30) Priority: 18.06.2003 US 463894
(71) Applicant: Siemens Information and Communication Mobile LLC, San Diego, CA 92127 (US)
(72) Inventor: Chadha, Loveleen, San Diego, CA 92127 (US)
(74) Representative: Epping, Hermann, Fischer

(57) **Abstract**

A modular wireless telephone (100) including a base module (102) having a connection area on a face (150) of the base module (102), the connection area (150) configured to electrically connect and mount an input device module (300) and a display device module (200).

The input device and display device modules are removably mounted on the connection area so that they can be replaced by a user of the wireless telephone.

## Description

### BACKGROUND OF THE INVENTION

The present invention generally relates to a modular device, and more particularly, embodiments relate to a modular wireless telephone.

Wireless telephones are well known and widely used, and are capable of performing more numerous and more complex tasks. Wireless telephones offer Internet access or digital camera functionality and have sufficient processing power to run small programs including games. With this increase in wireless telephone functionality has come a realization that many of the new functions are not as easily or well performed on a wireless phone as they are in their native environments. Some wireless telephones have been created that perform one of these additional functionalities well (e.g., a phone may be equipped with a high-graphics screen and thumb pad for better gaming). These phones are typically even more limited in functionality however, as they have been specialized to perform only a single task well. Further, the price of such a specialized phone can be high.

### SUMMARY OF THE INVENTION

To alleviate problems inherent in the art, embodiments provide a modular wireless telephone apparatus, system, means, and method.

According to a specific embodiment, the present invention provides a modular wireless telephone. The modular wireless telephone includes a base module including some components of a wireless telephone. The base module has a substantially planar face and at least one connection area on the substantially planar face. The connection area and the substantially planar face are configured to electrically couple and mount any one of multiple interchangeable input modules and any one of multiple interchangeable display modules to the base module.

According to another specific embodiment, the present invention provides a modular wireless telephone that includes a base module including components to power the wireless telephone. The base module includes a substantially planar surface and at least one electrical connector on the substantially planar surface to provide electrical coupling with a removable surface-mounted input device and a removable surface-mounted display device.

According to another specific embodiment, the present invention provides a method for upgrading a modular wireless telephone. The method includes the step of providing a modular wireless telephone. The modular wireless telephone includes a wireless telephone base module having a substantially planar mounting surface and including components of a wireless telephone. The modular wireless telephone also includes an input interface module having a first shape, and a display module having a second shape. The input interface module is capable of being removably attached and electrically coupled to the substantially planar mounting surface, and the display module is capable of being removably attached and electrically coupled to the substantially planar mounting surface. In a still further specific embodiment, the method includes the step of providing at least one alternate accessory module having a third shape, where the alternate module is capable of being removably attached and electrically coupled to the substantially planar mounting surface to replace the input interface module or the display module.

According to still further specific embodiments, the present invention provides a method for upgrading a modular wireless telephone. The method includes providing at least one of the following: a wireless telephone base module having a substantially planar mounting surface, an input interface module having a first shape, a display module having a second shape, and an alternate accessory module having a third shape. The wireless telephone base module includes components of a wireless telephone capable of providing mobile communication according to a selected protocol. The input interface module is capable of being removably attached and electrically coupled to the substantially planar mounting surface of the wireless telephone base module. The display module is capable of being removably attached and electrically coupled to the substantially planar mounting surface of the wireless telephone base module. The alternate accessory module is capable of being removably attached and electrically coupled to the substantially planar mounting surface of the wireless telephone base module to replace the input interface module or the display module. The alternate accessory module includes an input interface or a display screen. According to specific embodiments, the selected protocol is selected from at least one of GSM, CDMA, UMTS, TDMA, and AMPS.

With these and other advantages and features of the invention that will become hereinafter apparent, the invention may be more clearly understood by reference to the following detailed description of the invention, the appended claims, and the drawings attached herein.

### BRIEF DESCRIPTION OF THE DRAWINGS

Figure 1 is a perspective illustration of a conventional wireless telephone;
Figure 2 is a block diagram of a modular wireless telephone in accordance with some embodiments of the present invention;
Figure 3 is a perspective assembly illustration of a modular wireless telephone in accordance with some embodiments of the present invention;
Figure 4 is a side assembly view of a modular wireless telephone in accordance with some embodiments of the present invention;
Figure 5 is a perspective assembly illustration of a modular wireless telephone in accordance with some embodiments of the present invention;
Figure 6 is a side assembly view of a modular wireless telephone in accordance with some embodiments of the present invention;
Figure 7 is a perspective assembly illustration of a modular wireless telephone in accordance with some embodiments of the present invention;
Figure 8 is a side view of a modular wireless telephone input module in accordance with some embodiments of the present invention;
Figure 9 is a perspective assembly illustration of a modular wireless telephone in accordance with some embodiments of the present invention;
Figure 10 is a perspective illustration of a modular wireless telephone in accordance with some embodiments of the present invention;
Figure 11 is a perspective partial-assembly illustration of a modular wireless telephone in accordance with some embodiments of the present invention;
Figure 12 is a side view of a modular wireless telephone display screen in accordance with some embodiments of the present invention; and
Figure 13 is a perspective illustration of a modular wireless telephone in accordance with some embodiments of the present invention.

### DETAILED DESCRIPTION

There is a need for a modular wireless telephone capable of performing many of the tasks that typical wireless telephones are either not able to perform, or are not able to perform well or as flexibly as may be desired by the user. Further, a need exists for a modular telephone that is easily upgradeable and reconfigurable, thus reducing the cost and increasing the functionality of a basic phone.

Typical wireless telephones are not configured to be easily upgradeable, nor do they have interchangeable or replaceable parts. Embodiments herein describe a modular wireless telephone that is both capable of being upgraded and which has parts that may be substituted, interchanged, or replaced. Some embodiments include a modular wireless telephone that has a base unit and accessory modules. The base unit may be capable of performing substantial wireless telephone functions in the absence of accessory modules, with modules to be attached to achieve fuller functionality. This modularity allows basic modular telephones to be sold less expensively by either marketing the base module with less expensive and/or smaller modules for the base module. Users may then separately purchase a variety of modules to attach to the base module, depending on the users' needs. Modules of varying sizes and shapes may be freely interchanged as required or desired by the user.

For example, pursuant to some embodiments, a user may purchase a base module that is originally configured with a small monochrome display module and a basic keypad module. If the user wishes to add a larger keyboard (e.g., to improve the device's ability to send e-mail) he can do so by acquiring a larger keyboard module and replacing the original keypad module. When e-mailing is complete, the keyboard module may then be removed and replaced with the original keypad module, restoring the modular wireless telephone to its wireless telephone-like dimensions.

Other modules may also be provided for ready attachment and removal to the base module described herein. For example, a user may replace a small display module with a larger display module and also replace the original keypad module with a larger keyboard module. As another example, a display module may be replaced with a camera module to take digital pictures to send using the wireless telephone. Other configurations and benefits will become apparent to those skilled in the art.

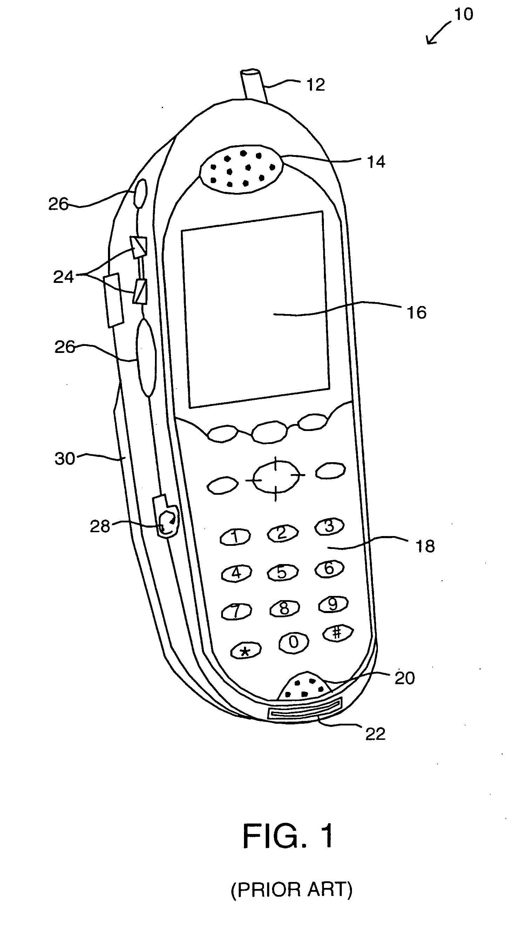

Referring first to Figure 1, a perspective illustration of a typical wireless telephone 10 is depicted for background explanation, but not limitation, useful for describing embodiments of the invention. Upon reading this disclosure, those skilled in the art will appreciate that different types, shapes, and configurations of devices may be used. As shown, a typical wireless telephone 10 includes an antenna 12, a speaker 14, a display screen 16, a keypad 18, a microphone 20, an AC/DC connector 22, volume controls 24, special function buttons 26, and a headphone jack 28. The antenna 12 is for transmitting and receiving communications signals and is typically located at the top of, and externally protruding from the wireless telephone 10. The antenna 12 may alternatively be internally located, mounted on any other exterior portion of the wireless telephone 10, or may be integrated into the structure or body of the wireless telephone 10 itself. The antenna 12 may also be configured to receive any number of known communications signals including, but not limited to, radio frequency (RF), infrared radiation (IR), satellite, cellular, optical, and microwave. The antenna 12 may additionally be in communication with or connected to an external active or passive transmitting and/or receiving device.

Typically, the speaker 14 is positioned to be adjacent to a user's ear and the microphone 20 near the user's mouth when the wireless telephone 10 is held in proper position for use. Many wireless telephones may be used in a "hands-free" mode of operation by having the speaker 14 amplified to project sound to a nearby user. Additional speakers 14 and microphones 20, either external or internal, may supplement the standard components and further facilitate such modes of operation.

The display 16 is also shown in a typical position on the upper frontal face of the wireless telephone 10. The display 16 is used to show various forms of information to a user. These forms of information may include the telephone number dialed, an incoming call telephone number and/or caller name (caller-ID), menus, e-mail, graphics, maps, web pages, and games. The type and quantity of information displayed is limited by the size of the standard display 16. The display 16 is typically a liquid crystal display (LCD), but may alternately be of any know and available display type including, but not limited to cathode ray tubes (CRT), and light emitting diodes (LED).

The keypad 18 is typically located beneath the display 16 on the frontal face of the wireless telephone 10, as is depicted in Figure 1. The keypad 18 may comprise any various number of key configurations and styles directed to any number of particular uses. The standard keypad 18 has keys for numbers zero through nine as well as an asterisk (*) key, and a number sign (#) key. These keys are used to enter phone numbers, interact with wireless telephone menus and functions, and can also be used to enter text and play simple wireless telephone games. Alternative key arrangements may include thumb pads or directional keys for enhanced functional capabilities. The type and number of keys possible is limited however by the amount of space available on the standard keypad 18.

Many wireless telephones also have keys and buttons located on other parts of the phone in addition to the standard keypad 18. This is at least partially because there is limited room available to place additional buttons on the standard keypad 18, as mentioned herein. Volume controls 24 are examples of non-keypad buttons that allow a user to interface with the wireless telephone 10. Such controls are convenient for interacting with common wireless telephone features such as volume control, display 16 contrast or mode, and access to frequently dialed or stored telephone numbers and information. Additional special function buttons 26 may be located at various points on the wireless telephone 10. The special feature buttons 26 depicted in Figure 1 may, for example, engage a speaker phone function, initiate a special feature of the wireless telephone 10, open a menu of stored telephone numbers, or mute the microphone 20.

The power supply 30 may be integrated into, removably attached to any portion of, or be external to the wireless telephone 10. Typical power supplies 30 are battery devices that are removably attached to the back of wireless telephones 10, as is shown in Figure 1. The power supply 30 may provide alternating current (AC) or direct current (DC), and may consist of any known device or components capable of delivering power to a wireless telephone 10. The many various power supply options will be readily apparent to those skilled in the art.

External connectors such as a multi-purpose (including AC/DC) connector 22, and a headphone jack 28 are also typical wireless telephone features. The connector 22 allows an internal or attached power supply 30 of a wireless telephone 10 to be charged, or provides the wireless telephone with external power from a variety of possible power supply sources (e.g., AC wall outlet, DC car cigarette lighter, solar panel, etc.). The connector 22 may also accept other wireless telephone accessories and devices designed to interface with the wireless telephone 10. The headphone jack 28 is often used in combination with the "hands-free" mode of operation, allowing a user to connect an assortment of available external speakers 14, microphones 20, and combinations thereof, to the wireless telephone 10. Standard headphones, when connected to the headset jack 28, provide private listening capabilities to the wireless telephone user.

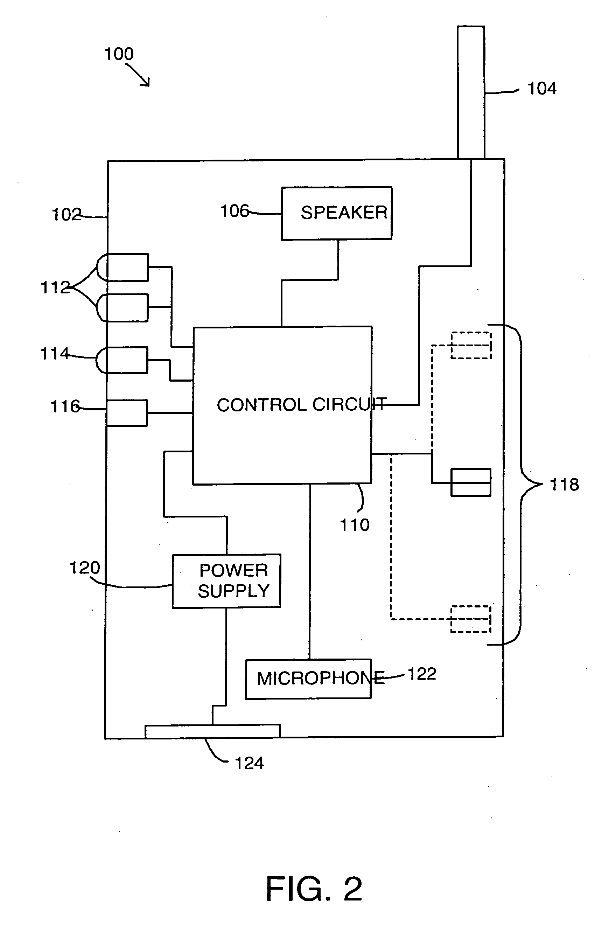

Now referring to Figure 2, an exemplary block diagram of a modular wireless telephone 100 in accordance with embodiments of the present invention is depicted. The modular wireless telephone 100 includes a base module 102 with electrical connector 118 configured to provide electrical connection to other modules (not yet shown). The base module 102 may have one or more electrical connectors 118.

As used herein, the term "electrical connectors" is generally used to refer to (and may be used interchangeably therewith) connectors, electrical contacts, and electrical contact areas. As used herein, an electrical connector may be any device, apparatus, or any element, combination, or portion thereof, that provides, facilitates, or enables electrical connection or coupling between two or more devices, elements, or objects. Electrical connectors may also provide physical connection of such devices, and the electrical connection may be enabled by such physical connection. Examples of these types of connectors are well known to those skilled in the art.

The base module 102 of the modular wireless telephone 100 may further house and include an antenna 104, a speaker 106, volume controls 112, a special purpose button 114, a headphone jack 116, a power supply 120, a microphone 122, and a multipurpose (including AC/DC) connector 124. These components perform functions in accordance with their typical roles in wireless telephones 10, as described herein, in conjunction with Figure 1. The base module 102 may alternatively include additional components available for connection to a wireless telephone 10, or may include fewer components than discussed herein. The base module 102 lacks certain components that are instead provided on a display module 200 and an input module 300 (both not shown in Fig. 2) that are attached and electrically coupled to the base module 102.

As used herein, the term "electrically coupled" indicates that one or more objects, devices, components, or portions, elements, or combinations thereof, are in electrical contact such that an electrical signal, pulse, or current is capable of passing between the one or more objects, enabling the objects to electrically communicate with one another. Objects may be electrically coupled without themselves being physically attached. For example, objects may communicate electrically through various wireless forms of communication or may be electrically connected by one or more wires or other conducting materials and/or devices.

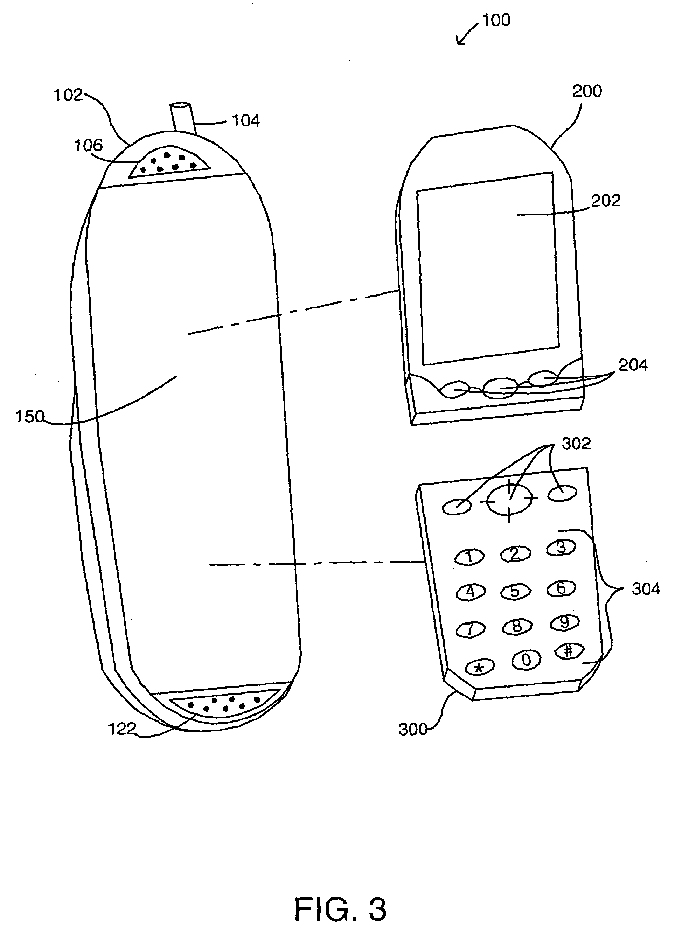

The base module 102 may also house or include one or more control circuits 110. The control circuit 110 may be capable of transceiver and/or multimedia functions. Transceiver functions may include transmitting, receiving, and managing wireless communications and communications signals according to at least one of, or a combination of, the following protocols: CDMA, GSM, UMTS, AMPS, TDMA. Accordingly, according to a specific embodiment, the base module 102 may be upgraded or changed and yet still be compatible for use with the various interchangeable input interface modules and/or interchangeable display modules. Multimedia functions may provide menu, Internet, gaming, position locating, graphical, and audible capabilities. The control circuit 110 is in electrical contact and communication with the other elements of the modular wireless telephone 100, and may either receive or transmit signals or other information to or from the various connected components described herein. Turning now to Figure 3, a modular wireless telephone 100, according to some embodiments is depicted. The modular wireless telephone 100 shown in Figure 3 includes a base module 102, a display module 200, and an input module 300. The base module 102 may contain elements as described herein, in conjunction with Figure 2, or may comprise fewer, or more elements than previously described. The base module 102 as shown in Figure 3 includes an antenna 104, a speaker 106, a microphone 122, and a mounting surface 150. In other embodiments, components such as the speaker 106 and the microphone 122 may alternatively reside on display modules 200 or input modules 300, or may be separate devices. At least one electrical connector 118 may be located on or near the mounting surface 150. The mounting surface 150 is configured to receive various display modules 200 and input modules 300. According to some embodiments, the mounting surface 150 is a substantially planar surface.

As used herein, the term "substantially planar" describes a surface capable of receiving variously shaped and sized modules. The surface need not be entirely planar or smooth, but should generally be configured to allow mounting of many interchangeable modules that may have dimensions that differ from the dimensions of the surface itself. The surface may comprise a single contiguous area, or may alternatively include multiple areas, which may or may not be separated by non-planar protrusions, objects, devices, detents, cavities, or areas.

As will become apparent hereinafter, having a substantially planar mounting surface 150 allows the mounting of many variously sized and shaped modules 200, 300. Such an embodiment provides both enhanced capabilities to the modular wireless telephone 100, and enables upgrading of wireless telephone components (e.g., display modules 200 and input modules 300).

The display module 200 includes a display screen 202 and control keys 204, as shown in Fig. 3. The display screen 202 may be any type or style of screen including, but not limited to, liquid crystal display (LCD), cathode ray tube (CRT), and light emitting diode (LED). The display screen 202 may also be a touch screen typical to personal digital assistants (PDA), allowing user input through the screen itself, via either a stylus, fingertip, or other appropriate selection device. The control keys 204 are "soft keys" having dynamic functionality depending upon the contents of the display screen 202. Soft keys are typically used to select menu items shown on the display screen 202, which are displayed adjacent to a given key's off-screen location. Alternatively, the control keys 204 may have fixed functionality directed to certain tasks such as changing the display screen contrast, scrolling, and performing any number of other pre-defined device, or user tasks.

The display module 200 is designed to be removably attached and electrically coupled to the base module 102. The mounting surface 150 of the base module 102 is configured to receive the display module 200, as well as other interchangeable modules (not shown in Fig. 3). Any method of removable attachment know to those skilled in the art may be used to mount the display module 200 onto the mounting surface 150 of the base module 102. Examples of some possible mounting mechanisms are described herein.

In some embodiments (e.g., including the embodiment shown if Figure 3), the mounting of the display module 200 to the base module 102 also includes the electrical coupling of the display and base modules. The display module 200 may have at least one electrical connector adapted to join or mate with an electrical connector 118 of the base module 102. Any standard or known electrical connector may be used to couple the two modules, and such devices and methods are well known to those skilled in the art. Some electrical connectors may be integrated with a physical connector for mounting the display module 200 onto the mounting surface 150 of the base module 102. Such connectors are also well known to those skilled in the art.

As shown in Fig. 3, the input module 300 includes control keys 302 and a keypad 304. The control keys 302 may be adapted to perform any available function. In some embodiments the control keys 302 may be thumb pads, directional pads, scrolling devices, or function keys programmed to perform such tasks as initiating a phone call (dialing a number), hanging up the phone, and turning the phone on or off. The keypad 304 is of standard configuration and performs in accordance with the typical function of a keypad on a wireless telephone 10, as described herein, in conjunction with Figure 1. The input module 300, like the display module 200, is also designed to be removably attached, and electrically coupled to the base module 102. The input module 300 may be attached and coupled to the base module 102 in a manner similar to that used to attach and couple the display module 200, or it may be attached and coupled using any other available or known method.

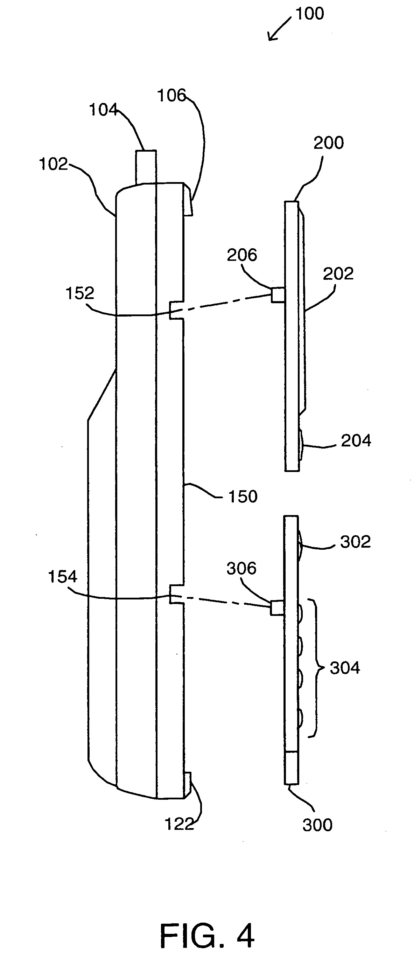

Referring now to Figure 4, a cross-sectional side assembly view of a modular wireless telephone 100, in accordance with some embodiments, is shown. Figure 4 illustrates one possible method for attaching and coupling the display module 200 and the input module 300 to the base module 102. Resident on the mounting surface 150 of the base module 102 are connectors 152, 154. Connector 152 is shown on an upper facial portion of the mounting surface 150, while connector 154 is shown on a lower facial portion. Connector 152 is shaped to receive connector 206, shown protruding from the back surface of the display module 200. Similarly, connector 154 is shaped to receive connector 306, shown protruding from the back surface of the input module 300. When the respective connectors 152 and 206, and 154 and 306, are engaged, both the display module 200 and the input module 300 are removably attached and electrically coupled to the base module 102. Alternatively, either connector 152, 154 may be adapted to receive either module 200, 300. The connectors 152, 154 may also reside, in addition to those positions shown, on or adjacent to any portion or area of the mounting surface 150. The electrical connector 118 (from Figure 2) may be part of either or both of the connectors 152, 154, or may be located on or adjacent to the connectors 152, 154. Alternatively, the electrical connector 118 may be located anywhere on or adjacent to the mounting surface 150. In some embodiments, the connectors 152, 154 may themselves be electrical connectors 118.

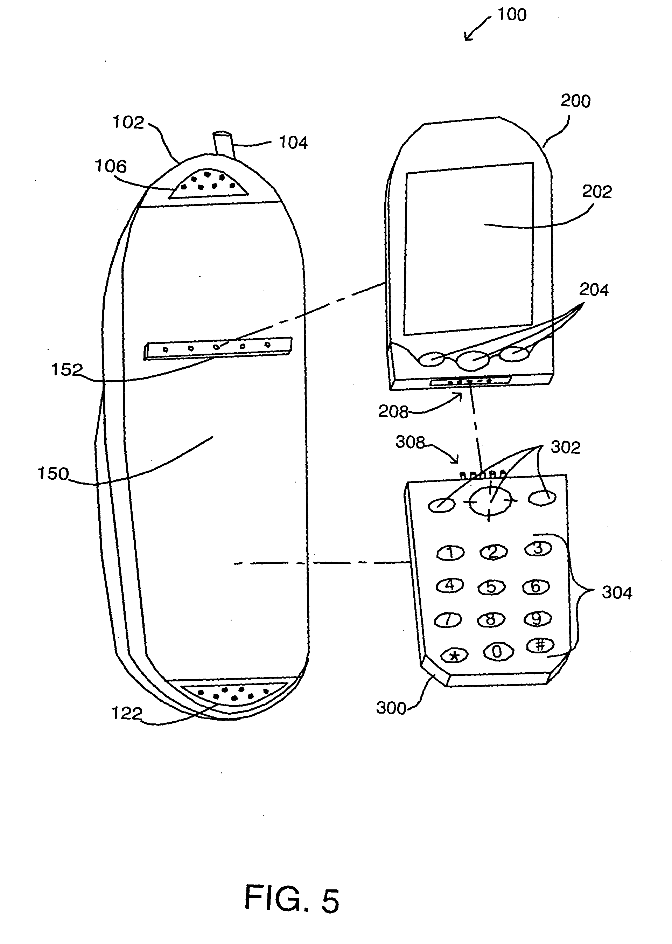

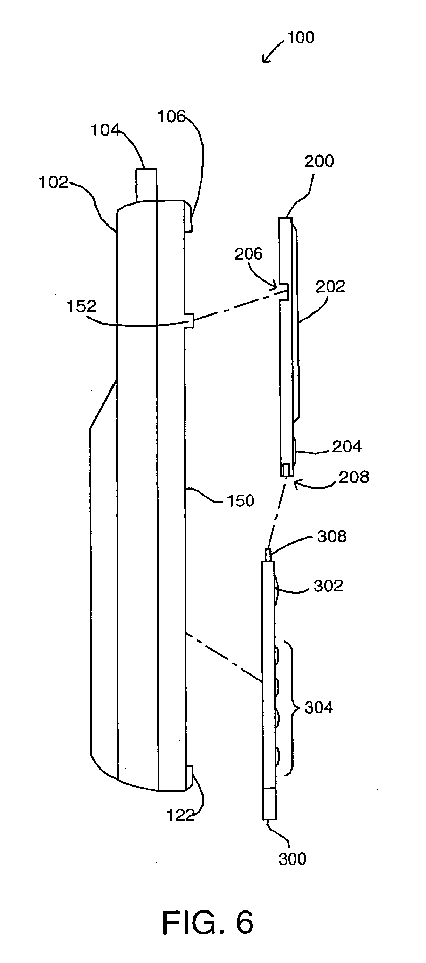

Figures 5 and 6 depict an embodiment where the display module 200 and the input module 300 are removably attached and electrically coupled both to each other, and to the base module 102. In Figures 5 and 6, the input module 300 includes connectors 308, and the display module 200 includes connectors 208. The connectors 208 are shaped and designed to receive or mate with the connectors 308, allowing the display module 200 to be removably attached and electrically coupled to the input module 300. Also in Figures 5 and 6, the display module 200 is removably attached and coupled to the base module 102 using an attachment mechanism similar to that shown and described in relation to Figure 4. The connector 152 of the base module 102 is located on an upper portion of the mounting surface 150, and is shaped and designed to receive the connector 206 (shown in Figure 6) of the display module 200. In such a configuration, the input module 300 is electrically coupled to the base module 102 through the display module 200. The mounting surface 150 may remain configured to physically receive the input module 300, or the input module 300 may be solely removably attached to the display module 200. Although the display module 200 is shown attached and electrically coupled to the base module 102, either of the modules (or both modules) 200, 300 may be attached to and/or electrically coupled to the base module 102. Similarly, the connector 152 may reside on or adjacent to any portion of the mounting surface 150. It should also be apparent that any available or known type of connector 208, 308, 152 may be used in place of those shown or described herein.

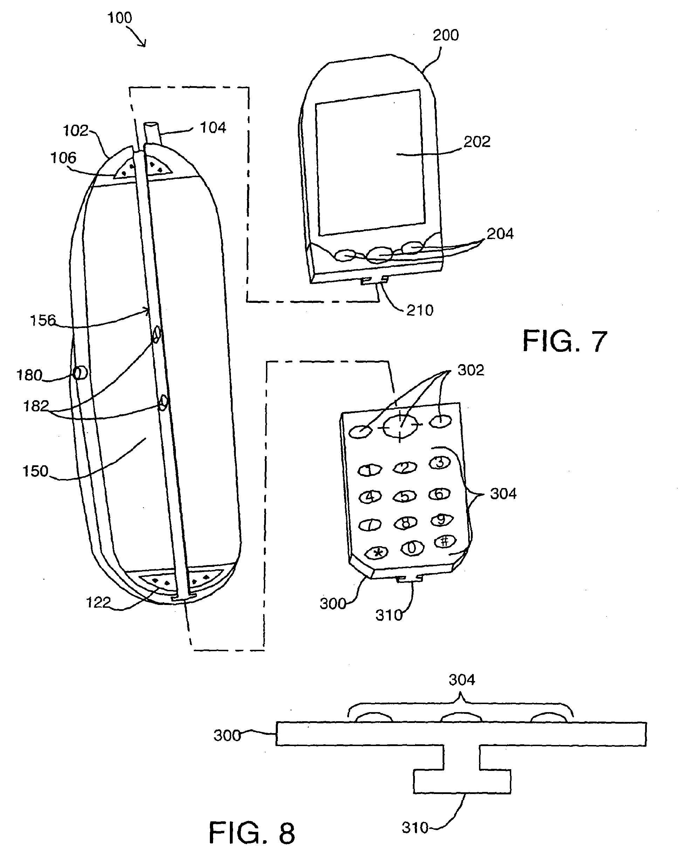

Turning now to Figure 7, another configuration for attaching and coupling the modules 200, 300 is shown. As depicted in Figure 7, the base module 102 includes a channel 156 extending longitudinally along the face of the base module 102, and passing through the mounting surface 150. The display module 200 includes a channel insert 210, shaped and designed to be inserted into the channel 156 of the base module 102. The display module 200 is removably attached and coupled to the base module 102 by sliding the channel insert 210 into the channel 156. Similarly, the input module 300 is removably attached and coupled to the base module 102 by sliding the input module's channel insert 310 into the channel 156. The base module 102 further comprises locking mechanisms 182 and release button 180. In the exemplary embodiment shown, the locking mechanisms 182 are depressible pegs or knobs that protrude from the base surface of the channel 156, and are biased in an upward position. The insertion of either of the modules 200, 300 may depress the locking mechanisms 182, or the release button 180 may itself be depressed to lower the locking mechanisms into the body of the base module 102, thus allowing insertion of a module 200, 300. The locking mechanisms 182 are then engaged once a module 200, 300 is properly attached to the base module 102.

The locking mechanisms 182, when engaged, may enter a detent, depression, hole, or cavity in or on an attached module 200, 300 or its respective channel insert 210, 310, locking the module 200, 300 to the base module 102. Alternative arrangements and configurations for the locking mechanisms 182 known to those skilled in the art may be substituted for those described herein. For example, the locking mechanisms 182 may be located anywhere on or near the mounting surface 150, or may reside on either the display module 200 or the input module 300. Similarly, the locking function may be achieved by designing the channel inserts 210, 310 for an interference fit with the channel 156.

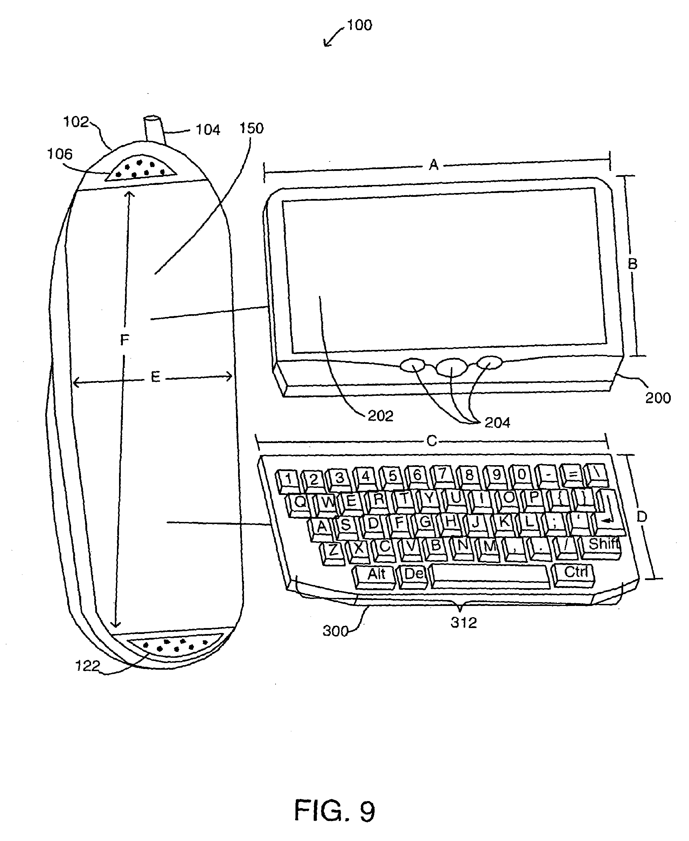

Figure 8 depicts an exemplary channel insert 310 of an input module 300, as seen from the side. The particular channel insert 310 shown is generally shaped as an inverse "T", and is designed to fit into a similarly shaped channel 156. Those skilled in the art will recognize that multiple and various shapes and configurations for channels 156 and channel inserts 210, 310 may be used to achieve the attachment and electrical coupling desired herein. It should also be apparent that in this and other embodiments, either the display module 200 or the input module 300 may be attached to either of the upper or lower facial portions of the base module 102 mounting surface 150. Similarly, no modules, a single module, or two modules of the same type (e.g., two display modules 200) may be attached to the base module 102. The electrical connector 118 (from Figure 2) may be part of or located inside of the channel 156, or may be located anywhere else on or adjacent to the mounting surface 150. Referring now to Figure 9, a further embodiment is shown of base module 102 equipped with different modules 200 and 300.

Figure 9 depicts a modular wireless telephone 100, having a base module 102, a display module 200, and an input module 300. The input module 300 is shown having a keyboard 312 configuration. As shown in Figure 9, various modules have dimensions A, B, C, D, E, and F. Wireless telephones configured as described herein allow the use of various modules in conjunction with a base module. In particular, the various modules can have different dimensions. In some embodiments, this is achieved by the use of a mounting scheme which is interchangeable with various modules. In some embodiments, this is further achieved by use of a mounting surface 150 which is substantially planar. Different modules having different dimensions (e.g., dimensions A and C) may be mounted on surface 150. A substantially planar mounting surface 150 also enables the mounting of accessory modules having dimensions B and D that differ from dimension F of the mounting surface 150. Dimensions E and F of the mounting surface 150 may, in some embodiments, be equal to the respective dimensions of the base module 102.

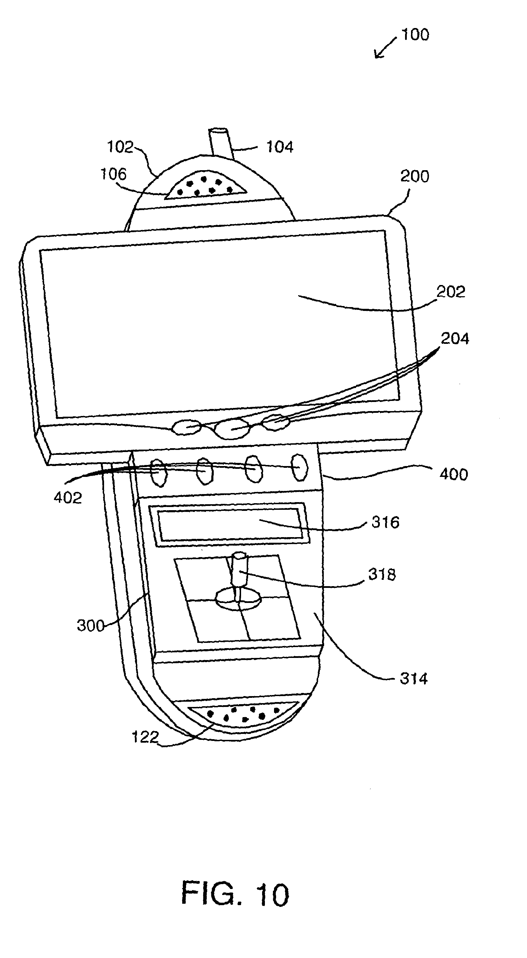

A display module 200 of various dimensional values A and B may be attached and coupled to the mounting surface 150 of the base module 102. In particular, dimensions A and B may vary from the dimensions of the mounting surface 150, particularly the lateral dimension E. Similarly, dimensions C and D of the input module 300 may also vary from the dimensions of the mounting surface 150, particularly the longitudinal dimension F. As depicted in Figure 9, both dimensions A and C are significantly larger than the corresponding lateral dimension E associated with the mounting surface 150. It should also now be apparent that either the display module 200 or the input module 300 may be solely attached to the base module 102, and that as a solely attached module, its longitudinal dimension (either B or D) may comprise or exceed the entire longitudinal surface of the mounting surface 150 (dimension F). Alternatively, smaller dimensions (particularly either or both of B and D) may be used to expose areas of the mounting surface 150 for attachment of additional modules (see the discussion of Figure 10, herein). Any number and/or combination of differently sized and shaped display modules 200 and input modules 300 may be attached to the substantially planar mounting surface 150 of the base module 102.

Figure 10 shows an assembled illustration of a modular wireless telephone 100. In Figure 10, the display module 200 is shown attached and coupled to the base module 102, and has a lateral dimension greater than that of the underlying mounting surface 150. In effect, a larger display screen 202 is attached to the base module 102 than would be typically possible for a standard wireless telephone. The input module 300 is shown attached and coupled to the base module 102, and is of substantially the same size and shape as the underlying mounting surface 150 to which it is attached. Input module 300 includes a game board 314 configuration. The game board 314 has a joystick 318, for enhanced gaming control and functionality, and a secondary display 316. The secondary display 316 may present game-specific information to the user, or may be configured to display modular wireless telephone or other pertinent information. The addition of these enhanced and/or specialty modules 200,300 allows a user to experience significantly improved gaming rivaling that of dedicated hand-held gaming devices.

Also shown in Figure 10 is an accessory module 400. The accessory module 400 includes control keys 402 which may be configured to perform any desired wireless telephone or other functions, in similar nature to other control keys 204, 302 described herein. The accessory module 400 may be a display module 200, an input module 300 (as shown), or any other module type having functionality that may enhance the capabilities of the modular wireless telephone 100. In the configuration of the modular wireless telephone 100 shown in Figure 10, three modules 200, 300, 400 are attached and coupled to the base module 102. In some embodiments the base module 102 would have three electrical connectors 118, one to attach and electrically couple to each of the three modules 200, 300, 400. In other embodiments, fewer than three electrical connectors 118 may reside on the base module 102, and any module 200, 300, 400 not directly electrically coupled to the base module 102 would be in electrical communication with the base module 102 through an attachment and coupling to at least one of the other modules 200, 300, 400.

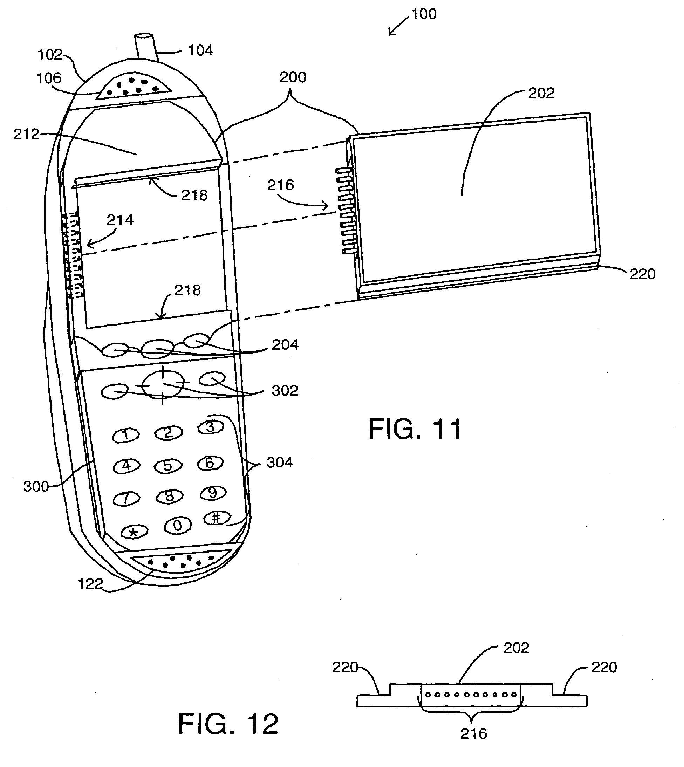

Turning now to Figure 11, a perspective partial-assembly illustration of a modular wireless telephone 100, in accordance with some embodiments, is shown. Figure 11 depicts a modular wireless telephone 100 having a base module 102, a display module 200, and an input module 300. The input module 300 is shown having a control key 302 and keypad 304, and is shown having substantially the same dimensions and shape as the underlying mounting surface 150 to which it is shown attached and coupled. In some embodiments the dimensions of either or both of the display module 200 and the input module 300 may differ from the dimensions and/or shape of the base module 102 and its mounting surface 150.

Figure 11 depicts an embodiment of the display module 200. In some embodiments, as depicted in Figure 11, the display module 200 comprises a display housing 212 and a display screen 202. The display housing 212 is shown having substantially similar dimensions and shape as the mounting surface 150, and is shown attached and electrically coupled to the base module 102. The display housing 212 has a connector channel 218 with grooves defined in two opposed longitudinal sides thereof, and the channel 218 extends from an open end on one side of the module housing 212 to a channel end wall at the opposite side of the display housing 212. The display screen 202 has channel inserts 220, designed to be removably inserted into the channel 218 of the display housing 212, and at least one electrical connector 216. The display housing 212 also has at least one electrical connector 214, designed to receive the connector 216 of the display screen 202. Although the connectors 214 are shown on the channel 218 end wall, the connectors 214 may be located anywhere in or adjacent to the connector channel 218. In some embodiments, the grooves of the channel 218 may be electrical connectors 214.

Figure 12 shows a side view of the display screen 202. The channel inserts 220 are shown on the opposed sides of the display screen 202, and are shaped to slide into the grooves of the connector channel 218. It should be apparent to those skilled in the art that various channel 218 and channel insert 220 configurations may be implemented to achieve the desired attachment and coupling described herein. Although the connectors 216 are shown on an end adjacent to the channel inserts 220, the connectors 216 may be located anywhere on the display screen 202 that allows the display screen 202 to be electrically coupled to the display housing 212. In some embodiments the electrical connectors 216 may be located on the channel inserts 220, or the channel inserts 220 may themselves be electrical connectors 216.

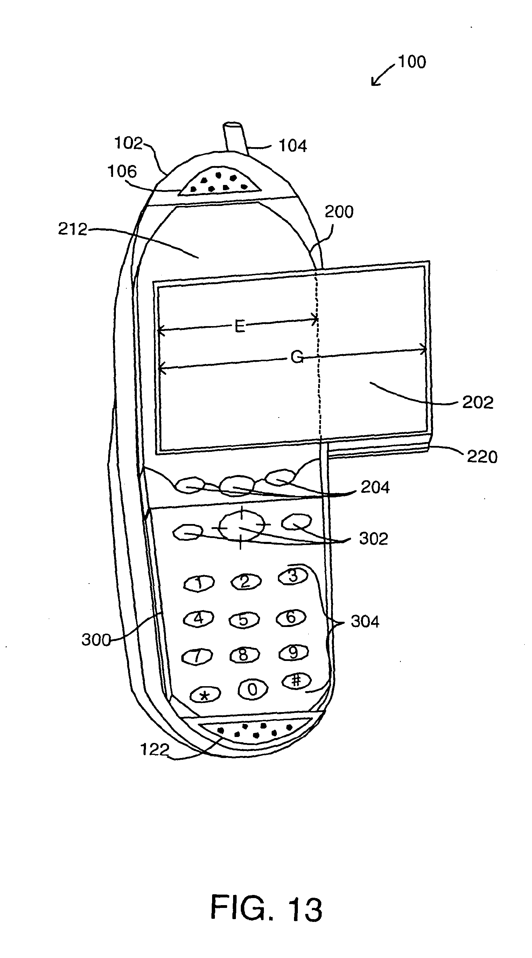

Referring now to Figure 13, a perspective illustration of a modular wireless telephone 100 in accordance with some embodiments is shown. The modular wireless telephone 100 is depicted with attached and electrically coupled display module 200 and input module 300. Both the display module 200 and the input module 300 are shown having substantially similar dimensions and shapes as the mounting surface 150 of the base module 102. In some embodiments the dimensions and shapes of the modules 200, 300 may differ from those of the base module 102 and its mounting surface 150. The display module 200 is shown comprising a display housing 212 and a display screen 202. The display screen 202 is removably attached and electrically coupled to the display housing 212, in a manner such as described in conjunction with Figures 11 and 12, herein. The dimension G shown in Figure 13 represents the lateral length of the display screen 202. The dimension E represents the width of the mounting surface 150 of the base module 102. The width of the base module 102 may, in some embodiments and configurations, be substantially the same as dimension E of the mounting surface 150.

One advantage of the display module 200 as configured and shown in Figure 13, is that the display screen 202 may have a dimension G that is larger than dimension E of the mounting surface 150. This allows display screens 202 of larger widths than would normally be possible on standard wireless telephones, to be inserted into the display housing 212, which is attached to the base module 102. The viewable area of the display screen 202 is thereby increased over typically-sized display screens, and more displayable information may therefore be presented to the user.

Another advantage of such a configuration is that a user may purchase an inexpensive display screen 202 when acquiring the modular wireless telephone 100 (e.g., a monochrome display screen 202), and may then later upgrade the display screen 202 to one of enhanced quality and/or size (e.g., an active matrix, full-color display screen 202 and/or one that is twice the length of the original display screen 202). This allows basic modular wireless telephones 100 to be sold at cheaper prices by enabling substitution of more expensive components with less expensive components.

Some embodiments introduce a method for upgrading a modular wireless telephone where various replacement modules may be substituted for modules that were either purchased with the modular wireless telephone, or are currently attached to the modular wireless telephone base module. Such embodiments enable a modular wireless telephone retailer or seller to package a base module 102 with various combinations of display modules 200 and input modules 300. These packages may vary in price depending upon the modules included, and can generally be marketed and sold at lower prices than a typical wireless telephone 10 by including smaller, cheaper, and/or fewer modules in the packages. Users may then either upgrade modules they currently own by purchasing replacement modules of higher quality, larger size, or having greater capabilities, or may supplement the functionality of their modular wireless telephone 100 by purchasing modules with differing functionality from those already owned.

Although the present invention has been described with respect to various embodiments thereof, those skilled in the art will note that various substitutions may be made to those embodiments described herein without departing from the spirit and scope of the present invention.

## Claims

1. A modular wireless telephone (100), comprising:
a base module (102) having a face portion (150) and at least a first electrical contact area (118) on the face portion (150);
a display module (200), removably coupled to the face portion (150) of the base module (102); and
an input module (300), removably coupled to the face portion (150) of the base module (102), the display module (200) and the input module (300) receiving signals from the base module (102).

2. The telephone of claim 1, wherein the display module (200) is electrically coupled to and removably attached to the input module (300).

3. The telephone of claim 1 or 2, wherein the face portion (150) of the base module (102) further comprises a channel (156) having grooves defined in two opposed longitudinal sides thereof, the channel (156) extending at least partially along the face portion (150).

4. The telephone of claim 3, wherein the display module (200) further comprises an engaging member (210) that protrudes from, and extends at least partially along a face of the display module, the engaging member (210) being shaped to fit into the grooved channel (156) of the base module (102), and the display module (200) being removably connected to the base module (102) by inserting the engaging member (210) into the grooved channel (156).

5. The telephone of claim 3, wherein the input module (300) further comprises an engaging member (310) that protrudes from, and extends at least partially along a face of the input module, the engaging member (310) being shaped to fit into the grooved channel (156) of the base module (102), and the input module (300) being removably connected to the base module (102) by inserting the engaging member (310) into the grooved channel (156).

6. The telephone of claim 1, further comprising a second electrical contact area (118) on the face portion (150).

7. The telephone of claim 1, wherein the display module (200) further comprises:
a module housing (212), having a channel (218) with grooves defined in two opposed longitudinal sides thereof, the channel (218) extending from an open end on one side of the display module housing to a channel end wall at the opposite side of the display module housing, and having at least one electrical contact (214) within the channel (218).

8. The telephone of claim 7, the display module (200) further comprising:
a display screen (202) having engaging members (220) on two opposite sides and at least one electrical contact (216), wherein the display screen (202) is inserted into the open end of the grooved channel (218) of the display module housing (212), such that the engaging members (220) enter the grooves of the channel (218), and the display screen (202) is electrically coupled to the display module housing (212).

9. The method for upgrading a modular wireless telephone (100), comprising:
providing at least one of the following:
a wireless telephone base module (102) having a substantially planar mounting surface (150);
at least one display module (200) having a first shape, the display module (200) capable of being removably attached and electrically coupled to the mounting surface (150) ;
at least one input interface module (300) having a second shape, the input interface module (300) capable of being removable attached and electrically coupled to the mounting surface (150);
at least one alternate accessory module (200, 300, 400) having a third shape, the alternate module (200, 300, 400) capable of being removably attached and electrically coupled to the mounting surface (150) to replace said at least one display module or said at least one input interface module.

10. The method according to claim 9, wherein the first and second shapes are different than the third shape.

11. The method according to claim 9, wherein the alternate accessory module has a different configuration than the display module or the input interface module, and wherein the third shape is the same as the first or second shape.
